# EUROPEAN PATENT APPLICATION

(11) **EP 4 184 662 A2**
(43) Date of publication of application: **24.05.2023**
(21) Application number: 22206938.7
(22) Date of filing: 11.11.2022
(51) Int. Cl.: H01M 10/613, H01M 10/6552, H01M 10/6553, H01M 10/6554, H01M 50/502

(54) **BATTERY MODULE WITH HEAT PIPES**

(30) Priority: 18.11.2021 US 202117455624
(71) Applicant: PRATT & WHITNEY CANADA CORP., Longueuil, Québec J4G 1A1 (CA)
(72) Inventor: FREER, Richard, (01BE5) Longueuil, J4G 1A1 (CA)
(74) Representative: Dehns

(57) **Abstract**

A battery module (10) includes at least one cell (14) having a positive terminal, a negative terminal, and a voltage and a current rating. A first electrically conductive heat pipe (20, 20A) is thermally and electrically connected to the positive terminal. A second electrically conductive heat pipe (20, 20B) is thermally and electrically connected to the negative terminal. The first and second heat pipes (20, 20A, 20B) have the voltage and the current rating.

## Description

### TECHNICAL FIELD

The application relates generally to energy storage such as batteries, and more particularly to energy storage such as batteries for use in aircraft, including more-electric, hybrid-electric, and full-electric aircraft.

### BACKGROUND

Heat transfer is used in battery applications to transmit heat and reduce cell-to-cell temperature differences. Some devices used to transfer heat in battery applications are electrically insulated from the cells. Since electrical insulators may also insulate heat, the use of electrically-insulating devices may reduce their effectiveness in transferring heat, and may require electrical conductors to be added to connect the cells together, which may increase the weight of the battery.

### SUMMARY

In accordance with one aspect, there is provided a battery module comprising: at least one cell having a positive terminal, a negative terminal, and a voltage and a current rating; a first electrically conductive heat pipe thermally and electrically connected to the positive terminal; and a second electrically conductive heat pipe thermally and electrically connected to the negative terminal; and the first and second heat pipes having the voltage and the current rating.

The battery module as defined above and described herein may further include one or more of the following features, in whole or in part and in any combination.

In certain embodiments, the at least one cell is a plurality of cells; and the plurality of cells are electrically interconnected by the first and second heat pipes via respective ones of the positive and negative terminals of the plurality of cells in one of an electrical series arrangement and an electrical parallel arrangement to provide the voltage and the current rating.

In certain embodiments, the plurality of cells are electrically interconnected by the first and second heat pipes via the respective ones of the positive and negative terminals of the plurality of cells in the electrical parallel arrangement; and each of the first and second heat pipes is shaped as a plate.

In certain embodiments, the first and second heat pipes structurally support a weight of the plurality of cells.

In certain embodiments, a heat sink is thermally connected to the first and second heat pipes.

In certain embodiments, a heat source is thermally connected to the first and second heat pipes.

In certain embodiments, the battery module has a mounted orientation when in use in an aircraft; each of the first and second heat pipes has a top half and a bottom half, the bottom half being below the top half relative to a direction of gravity when the battery module is in the mounted orientation; the heat sink is thermally connected to the top half of the first and second heat pipes; and the heat source is thermally connected to the bottom half of the first and second heat pipes.

In certain embodiments, the heat sink has a second thermal transfer fluid being a liquid.

In certain embodiments, each of the first and second heat pipes is shaped as a plate: the first heat pipe has a first upper plate portion and the second heat pipe has a second upper plate portion; and the heat sink includes a heat-exchange passage delimited by the first upper plate portion, the second upper plate portion, and a flow guide forming a seal between the heat-exchange passage and the at least one cell, the heat sink including a second thermal transfer fluid configured to flow along the flow guide and through the heat-exchange passage.

In certain embodiments, at least one of the first heat pipe and the second heat pipe has at least one circulation hole extending through the at least one of the first heat pipe and the second heat pipe.

In certain embodiments, the at least one cell is at least one pouch cell.

In certain embodiments, one or both of the positive and negative terminals defines a terminal surface facing a corresponding one of the first and second heat pipes, at least part of the terminal surface being free of overlap by the corresponding one of the first and second heat pipes.

In certain embodiments, at least part of the terminal surface is free of overlap by the first heat pipe.

In certain embodiments, the corresponding one of the first and second heat pipes defines a plate surface terminating at an edge, some of the terminal surface overlaps the plate surface and a remainder of the terminal surface extends past the edge.

In certain embodiments, the corresponding one of the first and second heat pipes defines a plate surface terminating at an edge, the edge having edge cut-outs, some of the terminal surface overlaps the plate surface and a remainder of the terminal surface is aligned with one of the edge cut-outs.

In certain embodiments, the corresponding one of the first and second heat pipes defines a plate surface and plate holes, the terminal surface is aligned with one of the plate holes.

In certain embodiments, one or both of the positive and negative terminals has wiring extending between the one or both of the positive and negative terminals and a corresponding one of the first and second heat pipes.

A plurality of battery modules, each battery module of the plurality of battery modules being according to the battery module as defined above and herein, the battery modules of the plurality of battery modules arranged in a series electrical arrangement to form a battery pack.

In another aspect, there is also provided a battery module, which the Applicant expressly reserves the right to claim independently, comprising: a case having walls defining an interior; at least one cell in the interior having a positive terminal, a negative terminal, and a voltage and a current rating; a first electrically conductive heat pipe in the interior mounted to one of the walls and thermally and electrically connected to the positive terminal; and a second electrically conductive heat pipe in the interior mounted to another of the walls and thermally and electrically connected to the negative terminal; and the first and second heat pipes having the voltage and the current rating.

In a further aspect, there is provided a method of cooling a battery module, which the Applicant expressly reserves the right to claim independently, the method comprising: operating at least one cell of the battery module to generate an electrical current flowing through heat pipes of the battery module that are thermally and electrically connected to opposite ends of the at least one cell, operation of the at least one cell transferring heat to the heat pipes; and cooling the heat pipes at a heat sink of the battery module.

In a further aspect, there is provided a method of transferring heat within a battery module having at least one cell and heat pipes connected to the at least one cell, the method comprising conducting heat between a terminal of the at least one cell and one of the heat pipes.

### DESCRIPTION OF THE DRAWINGS

Reference is now made to the accompanying figures in which:
Fig. 1 is a perspective view of a battery module;
Fig. 2A is a perspective view of heat pipes and cells of the battery module of Fig. 1;
Fig. 2B is an enlarged cross-sectional view of region IIB of Fig. 2A;
Fig. 2C is an enlarged cross-sectional view of region IIC of Fig. 2A;
Fig. 3 is an end view of the heat pipes and cells of Fig. 2;
Fig. 4 is another end view of heat pipes and cells of a battery module as shown in Fig. 1;
Fig. 5 is a perspective view of multiple battery modules of Fig. 1 arranged in series;
Fig. 6 is a perspective view of multiple battery modules of Fig. 1 arranged in parallel;
Fig. 7 is a flow chart of an example method;
Fig. 8A is another perspective view of heat pipes and cells of the battery module of Fig. 1;
Fig. 8B is an end view of a heat pipe and cells of a battery module;
Fig. 8C is another end view of a heat pipe and cells of a battery module;
Fig. 8D is another end view of a heat pipe and cells of a battery module;
Fig. 9A is another perspective view of heat pipes and cells of the battery module of Fig. 1;
Fig. 9B is an exploded view of Fig. 9A; and
Fig. 10 is an illustration of an example method.

### DETAILED DESCRIPTION

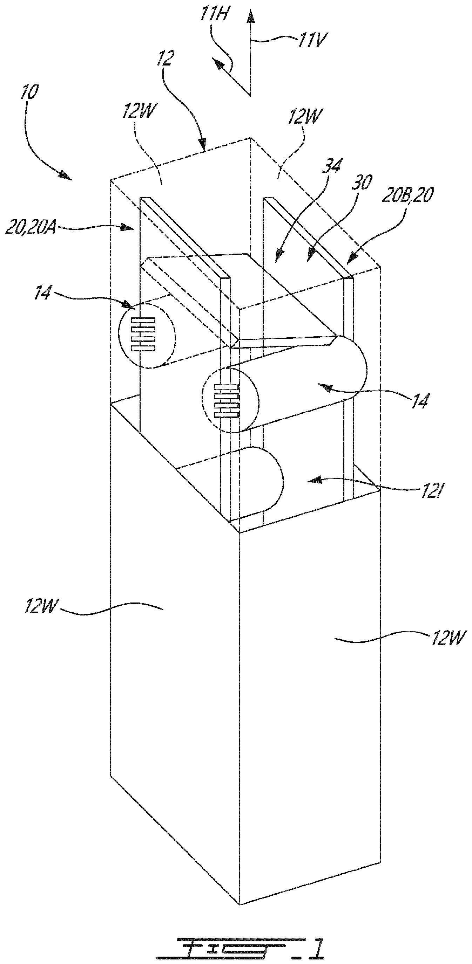

Fig. 1 illustrates a battery module 10 or battery module used to provide electrical power. The battery module 10 is an assembly of components some of which function to generate an electrical current and voltage which can be provided to a given load. The battery module 10 includes a case 12 or housing. The case 12 includes walls 12W. The walls 12W are interconnected to provide any desired shape to the case 12. The walls 12W collectively define an interior 121 of the case 12. The interior 121 of the case 12 may be sealed by the walls 12W so that other components of the battery module 10 within the interior 121, such as one or more cell(s) 14 of the battery module 10, are sheltered from the environment outside of the battery module 10. Referring to Fig. 1, the walls 12W are interconnected to shape the battery module 10 like a box. Other shapes for the battery module 10 are possible.

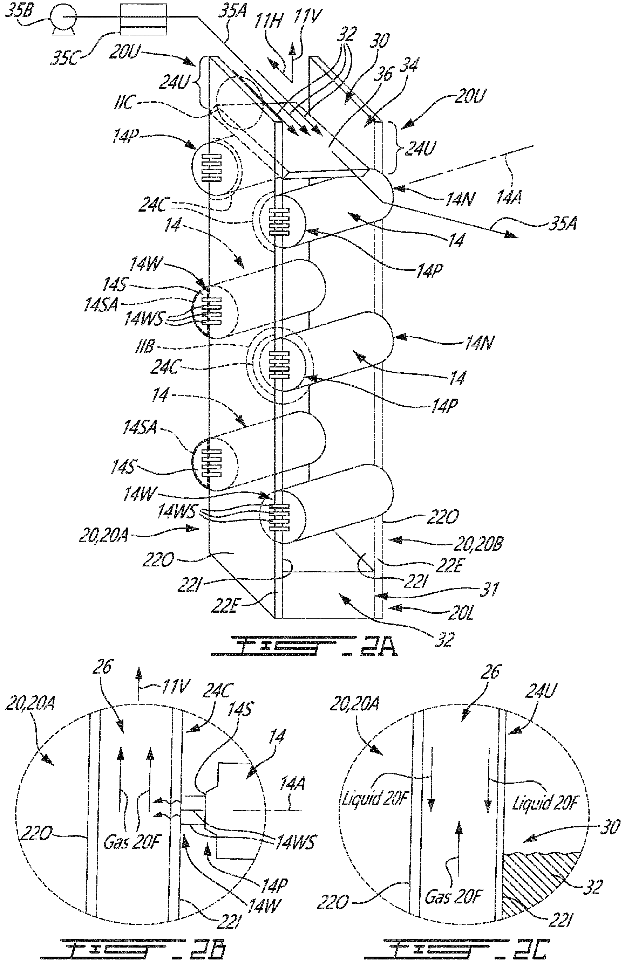

The one or more cell(s) 14 are positioned in the interior 121 and function to generate electrical power. Referring to Fig. 2A, the cell(s) 14 may include a single electrical-power generating cell, or may be a cell unit/assembly of multiple electrical-power generating cells stacked one against the other. In Fig. 2A, the cell(s) 14 have a cylindrical shape. The cylinder shape of the cell(s) 14 may facilitate cooling of the cell(s) 14. Other shapes for the cell(s) 14 are possible. In Fig. 2A, the cell(s) 14 are spaced apart from each other in directions parallel to both a vertical axis 11V of the battery module 10, and a horizontal axis 11H of the battery module 10. The horizontal and vertical axes 11H,11V are perpendicular to one another. The cell(s) 14 may include cooling fins, metal foams or other surface projections extending from the outer perimeter of the cell(s) 14 to improve heat transfer to and from the cell(s) 14. Referring to Fig. 2A, the cell(s) 14 each having a positive terminal 14P and a negative terminal 14N. The positive terminal 14P is located at one end of the cell(s) 14 and the negative terminal 14N is located at the opposite, other end of the cell(s) 14. In the cylindrical-shaped configuration of the cell(s) 14 of Fig. 2A, the cell(s) 14 define a longitudinal cell axis 14A. The positive and negative terminals 14P,14N of each cell 14 are spaced apart from each other an axial distance measured along the cell axis 14A. The cell(s) 14 may be arranged as desired within the interior 121. For example, and referring to Fig. 2A, the cells 14 are arranged in rows of cells 14, where each row has two cells 14. The cells 14 in each row are parallel to the cells 14 in the other rows. In an alternative possible arrangement of the cells 14 in the interior 121, an example of which is described below, the cells 14 are staggered in the direction of the vertical axis 11V such that each cell 14 occupies a different vertical position, and some of the cells 14 may have the same position along the horizontal axis 11H. The cell(s) 14 may thus have any suitable arrangement within the interior 121. The cell(s) 14 have a voltage rating and a current rating. The cell(s) 14 are configured to, during operation, output a given voltage value in Volts and a given current value in Amps. The voltage rating and the current rating of the cell(s) 14 may correspond to the voltage rating and the current rating of the battery module 10. In an embodiment, one or more of the battery module(s) 10 are used in an aircraft to provide electrical power to one or more components of the aircraft.

When the cell(s) 14 are operating at their voltage and current ratings, they generate heat which may need to be evacuated away from the cell(s) 14. The heat may also need to be evacuated after the cell(s) 14 have stopped operating. In some instances, the cell(s) 14 may themselves need to be heated prior to operating to ensure optimal operation of the cell(s) 14, for example so that they can output their voltage and current ratings. The battery module 10 therefore includes one or more devices by which heat can be transferred to and from the cell(s) 14.

One of these devices is now described in greater detail with reference to Fig. 2A. The battery module 10 includes heat pipes 20. The heat pipes 20 are thermally and electrically conductive. The heat pipes 20 are electrically conductive so that the electrical current generated by the cell(s) 14 flows through the heat pipes 20. The heat pipes 20 are also thermally conductive bodies which allow heat to be transferred to and from the cell(s) 14. The heat pipes 20 have the same voltage rating and current rating as the cell(s) 14. Since the heat pipes 20 are electrically conductive, having the same voltage rating and current rating as when the cell(s) 14 are operating allows the heat pipes 20 to form an electrical circuit with the cell(s) 14 so that the heat pipes 20 contribute to the voltage and current outputted by the cell(s) 14 to a load. In an embodiment, the heat pipes 20 have at least at the same rating as the overall voltage and current rating of the cell(s) 14, meaning that the voltage and current rating of the heat pipes 20 may be larger than they are for the cell(s) 14.

Referring to Fig. 2A, the heat pipes 20 are in the shape or form of plates. Thus, the expression "heat pipe plates 20" may be used herein, it being understood that the heat pipes 20 may have other shapes including, but not limited, cylinders, tubular, and other three-dimensional polygons. Referring to Fig. 2A, the heat pipe plates 20 are flat and planar bodies having a width, a height and a length. The heat pipe plates 20 have inner walls 221 which face the cell(s) 14 and opposite outer walls 22O. The heat pipe plates 20 also have a peripheral edge 22E extending between and interconnecting the inner and outer walls 22I,22O. The peripheral edge 22E or the distance between the inner and outer walls 22I,22O defines the thickness of the heat pipe plate 20. The heat pipe plates 20 are shaped and sized to have at least at the same rating as the overall voltage and current rating of the cell(s) 14. Although shown in Fig. 2A as being flat, the heat pipe plates 20 may be curved, bent or have other shapes, or parts of the heat pipe plates 20 may be curved or bent. Referring to Fig. 2A, the heat pipe plates 20 have an upright orientation. The heat pipe plates 20 have an upper end 20U, and a lower end 20L positioned beneath the upper end 20U. Referring to Fig. 2A, the heat pipe plates 20 have an orientation that is substantially parallel to the vertical axis 11V of the battery module 10. By "substantially parallel", it will be understood that the magnitude of the vertical orientation vector of the heat pipe plates 20 is larger than the magnitude of the horizontal orientation vector. The heat pipe plates 20 may have an orientation forming a non-zero angle with a vertical plane, such that the heat pipe plates 20 are slanted relative to the vertical plane provided that they are still upright. It will thus be appreciated that the heat pipe plates 20 have vertical variation between the ends of the heat pipe plates 20. The inner and outer walls 22I,22O of the heat pipe plates 20 may be made of light metal, such as aluminum or copper. The heat pipe plate 20 may include cooling fins, metal foams or other surface projections extending from their surfaces to improve heat transfer with the fluid within the heat pipe plates 20.

Referring to Fig. 2A, the heat pipe plates 20 have one or more contact plate portions 24C. The contact plate portions 24C are portions of the inner wall 221 of the heat pipe plates 20 which are in contact with, or face, the cell(s) 14. In the configuration of the battery module 10 shown in Fig. 2A, the heat pipe plates 20 have multiple contact plate portions 24C each of which is in contact with, or facing, one of the cells 14. Referring to Fig. 2A, the heat pipe plates 20 also have one or more upper plate portions 24U. The upper plate portions 24U are portions or segments of the heat pipe plates 20 that are positioned vertically above the contact plate portions 24C. This arrangement of the upper plate portion 24U and the contact plate portions 24C can take different forms. For example, and referring to Fig. 2A, the upper plate portion 24U is at the upper end 20U of the heat pipe plates 20 and the contact plate portions 24C are located vertically between the upper and lower ends 20U,20L. For example, in an alternate shape for the heat pipe plate 20 which is slanted with respect to a vertical plane, the contact plate portions 24C may be located at the upper and lower ends 20U,20L and the upper plate portion 24U may be located between the upper and lower ends 20U,20L in the middle of the heat pipe plates 20 at a position that is vertically higher than the contact plate portions 24C.

Figs. 2B and 2C show the interior of the heat pipe plates 20 at the contact plate portions 24C and at the upper plate portions 24U, respectively. Referring to Figs. 2B and 2C, the heat pipe plates 20 have an internal passage 26. The internal passage 26 is an inner volume of the heat pipe plate 20 that is sealed off from the environment outside of the heat pipe plate 20. The internal passage 26 is delimited by the inner and outer walls 22I,22O and the peripheral edge 22E of the heat pipe plates 20. The internal passage 26 is present along a length of some or all of the heat pipe plate 20. The internal passage 26 extends through the heat pipe plate 20 from at least the contact plate portion 24C to the upper plate portion 24U. Referring to Figs. 2B and 2C, the heat pipe plates 20 also have a heat pipe thermal transfer fluid 20F that is present in the internal passage 26. The heat pipe thermal transfer fluid 20F is a phase-change fluid which can undergo phase change (i.e. gas to liquid, or liquid to gas, or change in density) when heat is transferred to and from the heat transfer plate 20. For example, and referring to Fig. 2B, when the cell(s) 14 are operating and heat is being transferred to the contact plate portions 24C from the cell(s) 14, the heat pipe thermal transfer fluid 20F in the internal passage 26 along the contact plate portions 24C may be vaporized by the heat and rise upwardly through the internal passage 26 to the upper plate portion 24U. As explained in greater detail below, and referring to Fig. 2C, the heat pipe thermal transfer fluid 20F may be cooled with a heat sink 30 at the upper plate portion 24U, which causes the heat pipe thermal transfer fluid 20F to condense in the internal passage 26 along the upper plate portion 24U. The condensed heat pipe thermal transfer fluid 20F may accumulate into a liquid and flow back down under gravity through the internal passage 26 to the contact plate portions 24C below the upper plate portions 24U. One possible and non-limiting example of the heat pipe thermal transfer fluid 20F is glycol. Another possible and non-limiting example of the heat pipe thermal transfer fluid 20F is water at low pressure. Thus, the internal passage 26 and the heat pipe thermal transfer fluid 20F contained therein help to transfer heat from the cell(s) 14 to a heat sink 30. The internal passage 26 and the heat pipe thermal transfer fluid 20F contained therein may also help to transfer heat from a heat source 31 to the cell(s) 14 to heat the cell(s) 14. The heat pipe plates 20 thus have an internal heat-transfer and phase-changing fluid (i.e. the heat pipe thermal transfer fluid 20F) flowing therethrough which allows for heat transfer using gravity and/or wicking effects and thermal differences. The heat pipe plates 20 thus provide a conduit or medium along which heat can travel to/from/among the cell(s) 14.

The presence of the heat pipe thermal transfer fluid 20F within the heat pipe plates 20 may allow for equalizing or minimising hot spots in the heat pipe plates 20. When the cell(s) 14 heat up during their operation, the heat may be transferred along the cell(s) 14 toward its positive and negative terminals 14P,14N by conduction, and then by conduction to the heat pipe plates 20. The heat is then transferred by convection to the heat pipe thermal transfer fluid 20F in the internal passage 26. If a particular cell(s) 14 is getting too hot, it will be able to shed its heat to the heat pipe thermal transfer fluid 20F. The heat pipe thermal transfer fluid 20F within the heat pipe plates 20 thus allows for concentrated and localised cooling of an individual cell 14. In this way, the heat pipe plates 20 help equalize temperatures for the cell(s) 14 by applying more cooling to the cell(s) 14 that are running hotter, and less cooling effect to the cooler cell(s) 14. In an embodiment, the heat pipe plates 20 are not solid plates used for direct thermal conduction, but instead have an internal thermal fluid (e.g. the plate heat transfer fluid 20F) that can undergo a phase change and transfer heat, via convection and conduction, with the heat source 31 or the heat sink 30.

The heat pipe plates 20 are electrically conductive, in addition to being thermally conductive. Referring to Fig. 2A, the heat pipe plates 20 include a first heat pipe plate 20A and a second heat pipe plate 20B within the interior 121 of the case 12 of the battery module 10. More or fewer heat pipe plates 20 may be present in the battery module 10. The first heat pipe plate 20A is mounted to the positive terminal(s) 14P of the cell(s) 14. The second heat pipe plate 20B is mounted to the negative terminal(s) 14N of the cell(s) 14. An electrical circuit is thus formed by the first and second heat pipe plates 20A,20B and the cell(s) 14, such that an electrical current can flow through the first and second heat pipe plates 20A,20B and be provided to a load. When such a circuit is formed and the cell(s) 14 are operational, an electrical current will flow from the "positive" pipe or plate 20A mounted to the positive terminal(s) 14P to the "negative" pipe or plate 20B mounted to the negative terminal(s) 14N. The first and second heat pipes 20A,20B are spaced apart from each other in direction that is parallel to the cell axes 14A. The first and second heat pipes 20A,20B are spaced apart from each other on opposite longitudinal ends of the cell(s) 14. Referring to Fig. 2A, the first and second heat pipes 20A,20B are spaced apart from each other by the cell(s) 14. Referring to Fig. 2A, there is no direct contact between the first and second heat pipe plates 20A,20B. Referring to Fig. 2A, the first and second heat pipe plates 20A,20B are indirectly connected to each other via the cell(s) 14. In the electrical circuit formed by the first and second heat pipe plates 20A,20B and the cell(s) 14, the electrical current and heat flows between the first and second heat pipe plates 20A,20B only via the cell(s) 14. The electrical conductivity of the heat pipe plates 20 allows them to be treated like electrodes of the battery module 10.

Referring to Fig. 1, the first and second heat pipe plates 20A,20B within the interior 121 are mounted to and supported by the case 12. In an embodiment, the first heat pipe plate 20A is mounted to one of the walls 12W, and the second heat pipe plate 20B is mounted to the same wall 12W or a different wall 12W. The cell(s) 14 are thus mounted to, and supported by, the case 12 via the first and second heat pipe plates 20A,20B. When mounted to the walls 12W, the first and second heat pipes 20 are load-bearing, and structurally support a weight of the cell(s) 14. The mechanical link between the walls 12W and the first and second heat pipe plates 20A,20B may be, or may include, adequate electrical insulation so that electrical current is not conveyed from the first and second heat pipe plates 20A,20B to the walls 12W of the case 12. In an embodiment, one or more of the walls 12W are electrically non-conductive. In an embodiment, the walls 12W are electrically insulating so that electricity generated by the cell(s) 14 in the interior 121 of the battery module 10 is not conducted through or via the walls 12W. In an embodiment, the walls 12W are thermally insulated or insulating to reduce or prevent the transfer of heat through or via the walls 12W. In an embodiment, the walls 12W are both electrically and thermally insulating.

The mounting of the cell(s) 14 to the first and second heat pipe plates 20A,20B allows for the thermal and electrical conduction described above. The cell(s) 14 are secured to the first and second heat pipe plates 20A,20B. Referring to Figs. 2A and 2B, at least the positive terminal(s) 14P of the cell(s) 14 have a conductor 14W which extends from the positive terminal(s) 14P and is secured to the first heat pipe plate 20A. In an embodiment, the conductor 14W is welded or soldered to the contact plate portion 24C of the first heat pipe plate 20A. In an alternate embodiment, the conductor 14W is secured in wiring holes in the contact plate portion 24C of the first heat pipe plate 20A. In an embodiment, the negative terminal(s) 14N of the cell(s) 14 also have a conductor 14W which extends from the negative terminal(s) 14P and is secured to the second heat pipe plate 20B. The conductor 14W is thermally and electrically conductive. The conductor 14W thus allows for forming an indirect mechanical, thermal and electrical connection between the heat pipe plates 20 and the cell(s) 14. The heat pipe plates 20 may thus be welded or soldered to the cell(s) 14 for good thermal conductivity, and for minimum cost and complexity of manufacture. The conductor 14W may include one or more wires 14WS. The wires 14WS may have round or rectangular cross-sectional shapes. The wire(s) 14WS extend between and interconnect the contact plate portions 24C and the terminal(s) 14P,14N of the cell(s) 14. The wire(s) 14WS may be rigid or malleable. The wire(s) 14WS may be flexible. The conductor 14W may also include, or be compose of, other objects. For example, the conductor 14W may include one or more tab(s). Using the conductor 14W to join the cell(s) 14 to the heat pipe plates 20 may help to increase the heat transfer area between the cell(s) 14 and the heat pipe plates 20 and thus may help to improve heat transfer. The wire(s) 14WS may form multiple flexible and thin connections for connecting the positive terminal(s) 14P to the first heat pipe plate 20A while allowing the positive terminal(s) 14P to move due to thermal expansion, and to accommodate movement needed to enable venting of gasses from the positive terminal(s) 14P, as described in greater detail below. The wire(s) 14WS may form multiple flexible and thin connections for connecting the positive terminal(s) 14P to the first heat pipe plate 20A and enable the use of automatic disconnect mechanisms inside the cell(s) 14.

Other configurations are possible for mounting the cell(s) 14 to the first and second heat pipe plates 20A,20B in order to form the thermal and electrical conduction described above. For example, in an alternate embodiment, the positive and negative terminal(s) 14P, 14N of the cell(s) 14 are in flush contact and abutted directly against the contact plate portions 24C, and may be pressed against the contact plate portions 24C with a spring. For example, in another alternate embodiment, the conductor 14W includes or is a rigid metal link extending between the positive and negative terminal(s) 14P,14N and the contact plate portions 24C.

In the configuration of Fig. 2A, where the multiple cells 14 are arranged in rows of cells 14, the rows of cells 14 are secured in parallel to the first and second heat pipe plates 20A,20B. In the configuration of the cells 14 of Fig. 2A, the cells 14 are electrically interconnected by the first and second heat pipe plates 20A,20B via respective ones of the positive and negative terminals 14P,14N of the cells 14 in a parallel arrangement to provide the voltage and the current rating. In an alternate embodiment, the cells 14 are electrically interconnected by the first and second heat pipe plates 20A,20B via respective ones of the positive and negative terminals 14P,14N of the cells 14 in a series arrangement to provide the voltage and the current rating. In the configuration of the battery module 10 which has one cell 14, the voltage and the current rating is the voltage and the current rating of the single cell 14. In the configuration of the battery module 10 which has multiple cells 14 in a parallel electrical arrangement, for example the configuration of Fig. 2A, the voltage and the current rating is the voltage and the current rating of each of the cells 14. In the configuration of the battery module 10 which has multiple cells 14 in a series electrical arrangement, for example the configuration of Fig. 2A, the voltage and the current rating may be the collective voltage and the current rating of some or all of the cells 14. Thus, the overall voltage and the current rating of the cell(s) 14 may be a function of characteristics of each cell 14 and/or on how the cell(s) 14 are interconnected (e.g. in parallel, series, or series-parallel).

Referring to Fig. 2A, the battery module 10 has a heat sink 30. The heat sink 30 is in heat-exchange relationship with, and/or thermally connected to, an upper half or the upper plate portions 24U of the heat pipe plates 20. This heat exchange relationship allows heat to transfer between these components. For example, heat can be shed from the heat pipe plates 20 to the heat sink 30 to cool the cell(s) 14. The heat sink 30 is thus in heat exchange relationship with the heat pipe thermal transfer fluid 20F in the internal passage 26 along the upper plate portions 24U to condense the heat pipe thermal transfer fluid 20F. The heat sink 30 may be in heat-exchange relationship with other portions of the heat pipe plates 20 as well, such as the contact plate portions 24C. Some or all of the heat sink 30 may be positioned within the interior 121 of the case 12, and enclosed by part of the walls 12W.

Referring to Fig. 2A, the battery module 10 has a heat source 31. The heat source 31 is in heat-exchange relationship with, and/or thermally connected to, a lower portion, a lower half or the lower end 20L of the heat pipe plates 20. This heat exchange relationship allows heat to be transferred to the heat pipe plates 20, and ultimately, to the cell(s) 14. For example, heat can be transferred to the heat pipe plates 20 from the heat source 31 to then travel upward via the heat pipe thermal transfer fluid 20F to heat the cell(s) 14. The heat source 31 is thus in heat exchange relationship with the heat pipe thermal transfer fluid 20F in the internal passage 26 along the lower end 20L to vaporize the heat pipe thermal transfer fluid 20F. The heat source 31 may be in heat-exchange relationship with other portions of the heat pipe plates 20 as well, such as the contact plate portions 24C. The heat source 31 may be electric or a thermal engine. Some or all of the heat source 31 may be positioned within the interior 121 of the case 12, and enclosed by part of the walls 12W. In the configuration of the battery module 10 of Fig. 2A, the heat sink 30 is at a top portion or upper half of the heat pipes 20 where the vaporized heat pipe thermal transfer fluid 20F will be to be condensed by the heat sink 30, and the heat source 31 is at the bottom or lower half of the heat pipes 20 where the cooler thermal transfer fluid 20F will be. In an embodiment, the battery module 10 has only a heat source 31 and no heat sink 30. In an embodiment, the battery module 10 has only a heat sink 30 and no heat source 31. In an embodiment, the battery module 10 has both a heat source 31 and a heat sink 30 which are selectively operated to heat or cool. Referring to Fig. 2A, the battery module 10 has a mounted orientation that it assumes when it is used in an aircraft, for example. In Fig. 2A, the mounted orientation of the battery module 10 is vertical. The battery module 10 may have this orientation while the aircraft is stationary on flat horizontal terrain.

The heat source 31 and the heat sink 30 may have different configurations to achieve this function. For example, and referring to Fig. 2A, a second thermal transfer fluid 32 flows through or along the heat source 31 and the heat sink 30 to absorb heat from the heat pipe plates 20 (the heat sink 30 configuration), or to convey heat to the heat pipe plates 20 (the heat source 31 configuration). In the configuration shown in Fig. 2A, the second thermal transfer fluid 32 is a liquid, for example glycol, water, or a mixture of water and glycol, that flows through the heat source 31 or the heat sink 30. Referring to Fig. 2A, the second thermal transfer fluid 32 may be pumped into the heat sink 30 or into the heat source 31 via a fluid circuit 35A which has a pump 35B to pressurize and circulate the second thermal transfer fluid 32 through the fluid circuit 35A. The fluid circuit 35A may have a heat exchanger 35C through which the second thermal transfer fluid 32 is circulated to shed heat, or to receive heat. The second thermal transfer fluid 32 may be other types of liquid, or any type of gas (e.g. air). The second thermal transfer fluid 32 may circulate between, and be used in, both the heat source 31 and the heat sink 30. Thus, in the configuration of the heat source 31 and heat sink 30 shown in Fig. 2A, heat is transferred to/from the heat source 31/ heat sink 30 via convection. In another possible configuration of the heat source 31/ heat sink 30, heat transfer is achieved by conduction between the inner walls 22I of the heat pipe plates 20 and the heat source 31/ heat sink 30, in addition to, or to the exclusion of, convective heat transfer via the second thermal transfer fluid 32.

Referring to Fig. 2A, the heat sink 30 includes a heat-exchange passage 34. The heat-exchange passage 34 is a volume that extends along some or all of the width of the heat sink 30, where the width is defined along the horizontal axis 11H. Referring to Fig. 2A, the heat-exchange passage 34 is located at the upper ends 20U of the heat pipe plates 20 and extends between the heat pipe plates 20. Referring to Fig. 2A, the heat-exchange passage 34 is defined between, and delimited by, the first and second heat pipe plates 20A,20B (more particularly their upper ends 20U) and by a flow guide 36 of the heat sink 30. The heat-exchange passage 34 may be delimited at its upper extremity by one of the walls 12W of the case 12 (see Fig. 1). The heat-exchange passage 34 is thus located in the interior 121 of the case 12 of the battery module 10. The walls 12W of the case 12 may have one or more inlet port(s) to admit the second thermal transfer fluid 32 into the heat-exchange passage 34, and one or more outlet port(s) to allow the second thermal transfer fluid 32 to exit the heat-exchange passage 34.

In the configuration of the heat-exchange passage 34 of Fig. 2A, the heat-exchange passage 34 is delimited by the following bodies: on its sides by the upper ends 20U and the upper extremity of the peripheral edges 22E of the first and second heat pipe plates 20A,20B, at the bottom by the flow guide 36, and on the top by one of the walls 12W of the case 12. Referring to Fig. 2A, the flow guide 36 extends between, and is attached to, the first and second heat pipe plates 20A,20B. The flow guide 36 is positioned above the cell(s) 14. The flow guide 36 is thermally conductive and electrically insulating. Therefore, heat can be conducted along the flow guide 36 between the first and second heat pipe plates 20A,20B. An electrical current is prevented from being conducted between the first and second heat pipe plates 20A,20B by the flow guide 36. The flow guide 36 may be a planar or non-planar body. The flow guide 36 may define a smooth surface along which the second thermal transfer fluid 32 travels. Alternatively, the flow guide 36 may have one or more turbulence generators to disrupt the flow of the second thermal transfer fluid 32 in order to improve heat transfer. Alternatively, the flow guide 36 may have one or more channels therein to increase a heat transfer area and improve heat transfer. The second thermal transfer fluid 32 may be a gas or a liquid, or any other type of fluid. The second thermal transfer fluid 32 may be a liquid refrigerant and the flow guide 36 forms part of a liquid cooling plate. In an embodiment where the second thermal transfer fluid 32 is a liquid, the flow guide 36 may be sealingly attached to the first and second heat pipe plates 20A,20B and thus forms a seal between the heat-exchange passage 34 and the interior 121 of the battery module 10 where the cell(s) 14 are located. In this embodiment, the flow guide 36 prevents the liquid from entering the portion of the interior 121 where the cell(s) 14 are located. In an alternate embodiment where the second thermal transfer fluid 32 is a gas or a dielectric liquid or vapor, the flow guide 36 may be absent or alternatively the flow guide 36 may not be sealingly attached to the first and second heat pipe plates 20A,20B such that the gas may enter the portion of the interior 121 where the cell(s) 14 are located.

Other configurations or arrangements of the heat-exchange passage 34 and of the heat sink 30 are possible. For example, in one possible configuration, the heat-exchange passage 34 may be defined by a self-contained conduit through which the second thermal transfer fluid 32 flows. In such a configuration, the upper ends 20U of the heat pipes 20 protrude into the conduit to allow heat transfer on all exposed surfaces of the heat pipes 20. In another possible configuration, one or more of the heat pipes 20 has a portion which is in thermal contact with the second thermal transfer fluid 32 (e.g. liquid or air), which may flow over or around the portion of the heat pipe(s) 20. In another possible configuration of the heat sink 30, a portion of the heat pipe(s) 20, such as the lower end 20L, is immersed in the second thermal transfer fluid 32. In this configuration, the second thermal transfer fluid 32 is a dielectric cooling fluid that boils at a temperature that is selected to be below the temperature of the cell(s) 14 at which there is risk of cell damage or thermal runaway. The boiled second thermal transfer fluid 32 may either be vented or condensed at a suitable cooler and returned to the lower end 20L of the heat pipe(s) 20.

One possible configuration of the heat sink 30 is now described with reference to Fig. 2A. The second thermal transfer fluid 32 enters the heat-exchange passage 34 and flows along the flow guide 36 and/or along the lower sections of the upper plate portions 24U of the first and second heat pipe plates 20A,20B. The second thermal transfer fluid 32 may be a liquid refrigerant. The temperature of the liquid second thermal transfer fluid 32 when it enters the heat-exchange passage 34 is lower than the temperature of the vaporized heat pipe thermal transfer fluid 20F that is present in the internal passage 26 along the upper plate portions 24U. The heat pipe thermal transfer fluid 20F therefore sheds some of its heat to the second thermal transfer fluid 32 in the heat-exchange passage 34, which causes the second thermal transfer fluid 32 to increase in temperature, and also causes the heat pipe thermal transfer fluid 20F to decrease in temperature to condense and flow down via gravity through the internal passage 26 to the contact plate portions 24C. The heat-exchange passage 34 therefore allows for the heat pipe plates 20 to transfer heat to/from the cell(s) 14 via the second thermal transfer fluid 32 flowing along an upper portion of the heat pipe plates 20.

The arrangement of the heat sink 30 with the heat pipe plates 20 allows for the heat pipe plates 20 to be in direct cooling contact with the heat sink 30. The heat pipe plates 20 allow for direct thermal conduction for cylindrical cell(s) 14 without sacrificing or compromising electrical conductivity. Since the heat pipe plates 20 are electrical and thermal conductors connected to the cell(s) 14, there is less or no need for multiple layers of thermally conductive or electrically isolating materials between the cell(s) 14 and the heat pipe plates 20 which would inhibit heat or electricity conduction compared to the direct welded conductors that are the heat pipe plates 20. Using the heat pipe plates 20 as electrical and thermal conductors may help to increase the life of the cell(s) 14, and thus the life of the battery module 10, by helping to keep the temperature of the cell(s) 14 more uniform, by reducing differences in temperatures between the cell(s) 14, and by extracting heat from the cell(s) 14. This can help reduce the probability of thermal runaway and of cell-to-cell propagation in the event of thermal runaway of a cell 14.

Referring to Figs. 2A and 2B, one or both of the positive and negative terminals 14P,14N of a cell 14 has a terminal surface 14S. The terminal surface 14S is a surface of one or both of the terminal(s) 14P, 14N that faces toward one of the heat pipe plates 20. Referring to Fig. 2B, the terminal surface 14S is spaced apart from the contact plate portion 24C of the inner wall 22I of the heat pipe plate 20 in a direction parallel to the cell axis 14A. Referring to Fig. 2B, a gap is formed between the terminal surface 14S and the facing heat pipe plate 20, and a width of the gap is defined in a direction parallel to the cell axis 14A. The wires 14WS of the conductor 14W bridge the gap, or extend across the space, between the terminal surface 14S and the inner wall 22I, and mechanically, thermally, and electrically connect the terminal surface 14S to the inner wall 22I. In an alternative configuration, the gap is perpendicular to the cell axis 14A of the cell(s) 14, which may allow for flexing of the wires 14WS of the conductor 14A and thus allow for thermal expansion and movement of the positive terminal 14P. In an alternate embodiment, the terminal surface 14S of the negative terminal 14N is directly abutted against, or in direct contact with, the inner wall 22I of the heat pipe plate 20.

The terminal surface(s) 14S of the cell(s) 14 may be misaligned with the heat pipe plate 20, such that the inner wall 22I does not overlap or overlie all of the area defined by the terminal surface 14S. Referring to Fig. 2A, the terminal surface 14S has an exposed area 14SA that does not face the inner wall 22I across the gap. The exposed area 14SA is thus not covered by the heat pipe plate 20. Referring to Fig. 2A, the terminal surfaces 14S of both the positive and negative terminals 14P,14N of the cells 14 have an exposed area 14SA that extends past the peripheral edge 22E of the first and second heat pipe plates 20A,20B in a direction parallel to the horizontal axis 11H. In an embodiment, only the terminal surface 14S of the positive terminal 14P of the cell(s) 14 has the exposed area 14SA which is not overlapped by the inner wall 22I.

Exposing some or all of the terminal surface 14S of one or both of the positive and negative terminal(s) 14P,14N allows for gases, which may build up within the cell 14 when the cell 14 heats up, to be vented out of the cell 14 via the exposed portions of the terminal surfaces 14S without the heat pipe plates 20 obstructing the venting of the gases. Exposing some or all of the terminal surface 14S of one or both of the positive and negative terminal(s) 14P,14N allows for the terminal surface 14S itself (e.g. the end cap of the cell 14) to expand thermally in a direction parallel to the cell axis 14A without such thermal expansion impacting the adjacent heat pipe plate 20. In situations where the terminal surface 14S experiences thermal expansion, the deformable conductor 14W helps to accommodate the movement of the terminal surface 14S while still allowing the cell 14 to remain mounted to the heat pipe plate 20. Exposing some or all of the terminal surface 14S of one or both of the positive and negative terminal(s) 14P,14N helps to control the direction of gas that may vent from within the cell 14 in the event of damage or failure of the cell 14.

Different configurations for achieving the exposed area 14SA of one or both of the positive and negative terminal(s) 14P,14N are possible. For example, and referring to Fig. 2A, the heat pipe plates 20 are free of cutouts or holes. The cells 14 of Fig. 2A are positioned with respect to the first and second heat pipe plates 20A,20B such that part of both the positive and negative terminals 14P,14N - i.e. the exposed areas 14SA - extend past the peripheral edge 22E of the first and second heat pipe plates 20A,20B in the direction of the horizontal axis 11H. A remainder of the exposed areas 14SA faces, and is aligned with, the inner wall 22I. The wires 14WS of the conductor 14W are welded around the peripheral edge 22E of the first and second heat pipe plates 20A,20B. In one possible configuration, the terminal face 14S of the negative terminal 14N is abutted against the second heat pipe plate 20B such that no portion of the terminal face 14S is exposed, and the terminal face 14S of the positive terminal 14P is wired with the wires 14WS to the first heat pipe plate 20A across the gap such that part of the terminal face 14S (i.e. the exposed area 14SA) of the positive terminal 14P is exposed.

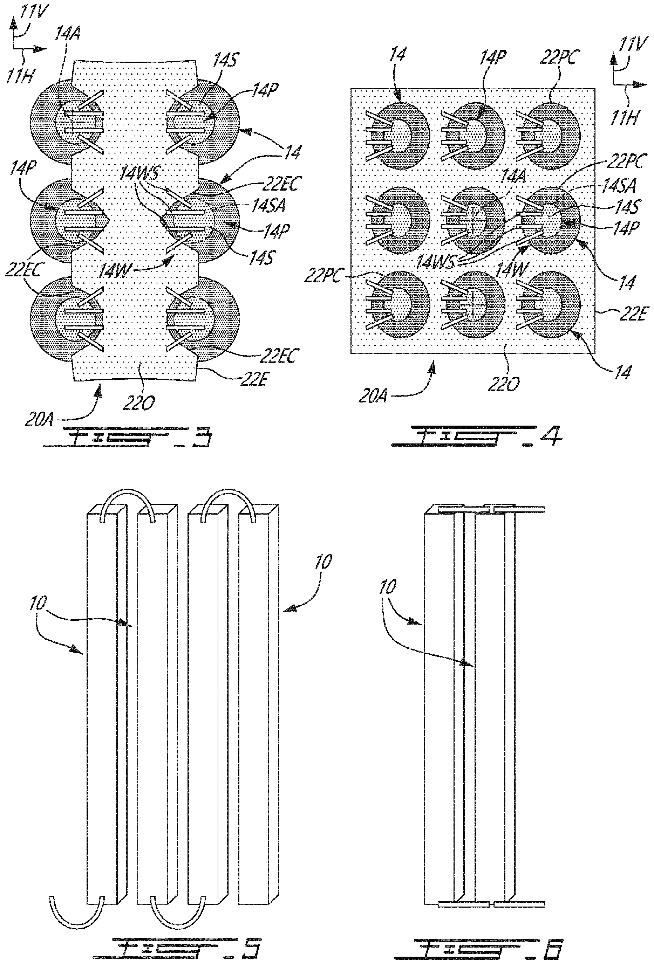

Another possible configuration for achieving the exposed area 14SA of one or both of the positive and negative terminal(s) 14P,14N is described with reference to Fig. 3. The first heat pipe plate 20A is shown in Fig. 3 as well as the positive terminals 14P of the cells 14. The surface area of the circle formed by the positive terminals 14P in Fig. 3 is less than the surface area of a circle whose diameter is defined by the outer walls of the cells 14. The peripheral edge 22E of the first heat pipe plate 20A includes edge cut-outs 22EC or grooves along the vertical segments of the peripheral edge 22. The edge cut-outs 22EC extend inwardly into the body of the first heat pipe plate 20A in a direction that is parallel to the horizontal axis 11H. The edge cut-outs 22EC have semi-circular shapes. The edge cut-outs 22EC may have other shapes. The edge cut-outs 22EC extend inwardly into the body from a remainder of the peripheral edge 22E, and may thus be considered recessed portions of the peripheral edge 22E. All of the exposed area 14SA of the terminal surfaces 14S of the positive terminals 14P is free of overlap by the inner wall 22I (not visible in Fig. 3) of the first heat pipe plate 20A. The cell axes 14A of the cells 14 do not intersect the inner wall 22I. The cell axes 14A of the cells 14 extend through the edge cut-outs 22EC. The wires 14WS of the conductor 14W extend from the positive terminals 14P and are welded to portions of the first heat pipe plate 20A that are adjacent to the edge cut-outs 22EC. The ends of the wires 14WS closest to the positive terminal 14P are welded to different portions of the terminal surface 14S.

Another possible configuration for achieving the exposed area 14SA of one or both of the positive and negative terminal(s) 14P, 14N is described with reference to Fig. 4. The first heat pipe plate 20A is shown in Fig. 4 as well as the positive terminals 14P of the cells 14. The surface area of the circle formed by the positive terminals 14P in Fig. 4 is less than the surface area of a circle whose diameter is defined by the outer walls of the cells 14. The portion of the body of the first heat pipe plate 20A spaced inwardly from the peripheral edge 22E includes plate cut-outs 22PC or plate holes which extend through the inner and outer walls 22I,22O. The area of the plate cut-outs 22PC may be less than the surface area of a circle whose diameter is defined by the outer walls of the cells 14. The area of the plate cut-outs 22PC may be greater than the surface area of the circle formed by the positive terminals 14P. The plate cut-outs 22PC extend through the first heat pipe plate 20A in a direction that is parallel to the cell axes 14A. The plate cut-outs 22PC have circular shapes. The terminal surfaces 14S of the positive terminals 14P are aligned with the plate cut-outs 22PC. All of the exposed area 14SA of the terminal surfaces 14S of the positive terminals 14P is free of overlap by the inner wall 22I because of the plate cut-outs 22PC of the first heat pipe plate 20A. The cell axes 14A of the cells 14 do not intersect the inner wall 22I. The cell axes 14A of the cells 14 extend through the plate cut-outs 22PC. The cell axes 14A of the cells 14 are aligned with the center axes of the circular plate cut-outs 22PC. The wires 14WS of the conductor 14W extend from the positive terminals 14P and are welded to portions of the first heat pipe plate 20A that are adjacent to the plate cut-outs 22PC. The ends of the wires 14WS closest to the positive terminal 14P are welded to different portions of the terminal surface 14S.

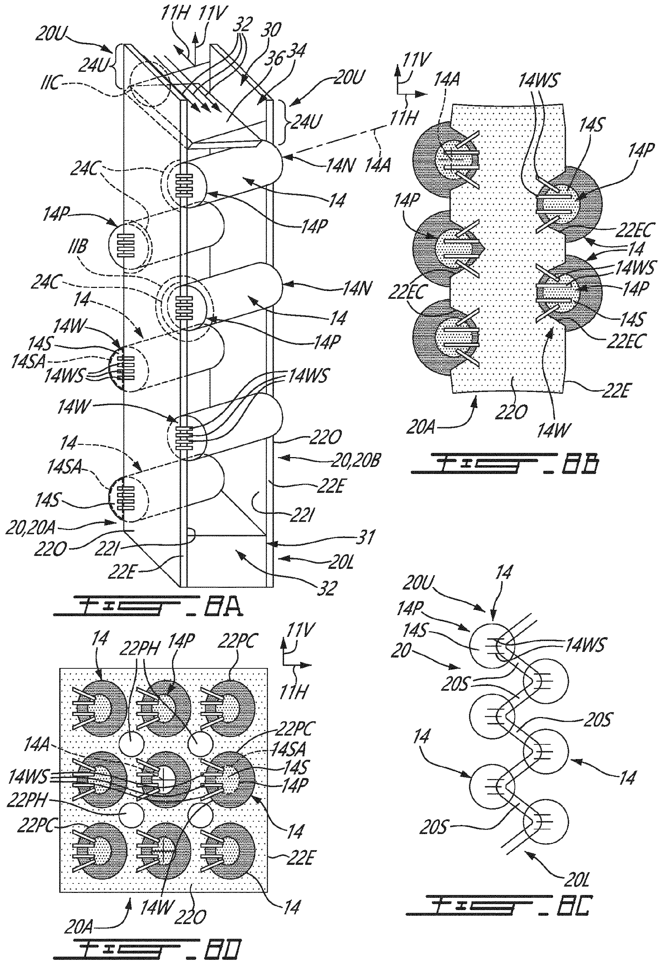

Referring to Fig. 8A, the cells 14 are arranged in the interior 121 of the battery module 10 to be staggered in the direction of the vertical axis 11V such that each cell 14 occupies a different vertical position defined along the vertical axis 11V. The cells 14 are also offset from each other along the horizontal axis 11H, such that some of the cells 14 may have the same position along the horizontal axis 11H. The cells 14 thus form a "zig-zag" pattern from one end 20L,20U of the heat pipe plates 20A,20B to the other end 20U,20L. Referring to Fig. 8B, the cells 14 are staggered vertically and connected to the edge cut-outs 22EC, similarly to the configuration in Fig. 3 whose description and features apply *mutatis mutandis* to Fig. 8B. Referring to Fig. 8C, a heat pipe 20 with a "zig-zag" configuration is shown. The heat pipe 20 has heat pipe segments 20S which are interconnected to each other at angles to form a serpentine or repeating shape from the upper end 20U to the lower end 20L of the heat pipe 20. The terminal surfaces 14S of the positive terminals 14P of the cells 14 are connected, via the wiring 14WS, to the ends of the heat pipe segments 20S, so as to form the exposed areas 14SA of the terminal surfaces 14S. Referring to Fig. 8D, the portion of the body of the first heat pipe plate 20A spaced inwardly from the peripheral edge 22E includes the plate cut-outs 22PC or plate holes which extend through the inner and outer walls 22I,22O, similarly to the configuration in Fig. 4 whose description and features apply *mutatis mutandis* to Fig. 8D. The first heat pipe plate 20A also has circulation holes 22PH which extend through the inner and outer walls 22I,22O and interspersed among the plate cut-outs 22PC. The circulation holes 22PH are located between the cells 14. The circulation holes 22PH allow for circulation of air or fluid around and among the cells 14 and heat pipes 20.

In the configurations of Figs. 3 and 4, the cut-outs 22EC,22PC and the flexible, thin connections provided by the wires 14WS are used to connect the cap of the positive terminal 14P to the heat pipe plate 20 while also allowing the cap to move due to thermal expansion and to accommodate movement needed to enable venting of gasses. The first and second heat pipe plates 20A,20B may have different configurations to achieve the exposed area 14SA, or may have the same configurations. For example, in an embodiment, the exposed area 14SA of the terminal surfaces 14S of the negative terminals 14N may be completely overlapped by one of the heat pipe plates 20 because there may be a low risk of gas build-up within the cell(s) 14 venting out of the cell(s) 14 via the negative terminal 14N. In an alternate embodiment, all of the terminal surface 14S of one or both of the positive and negative terminal(s) 14P,14N is overlapped by the inner wall 22I. This configuration may be used where the risk of cell blowout is minimal.

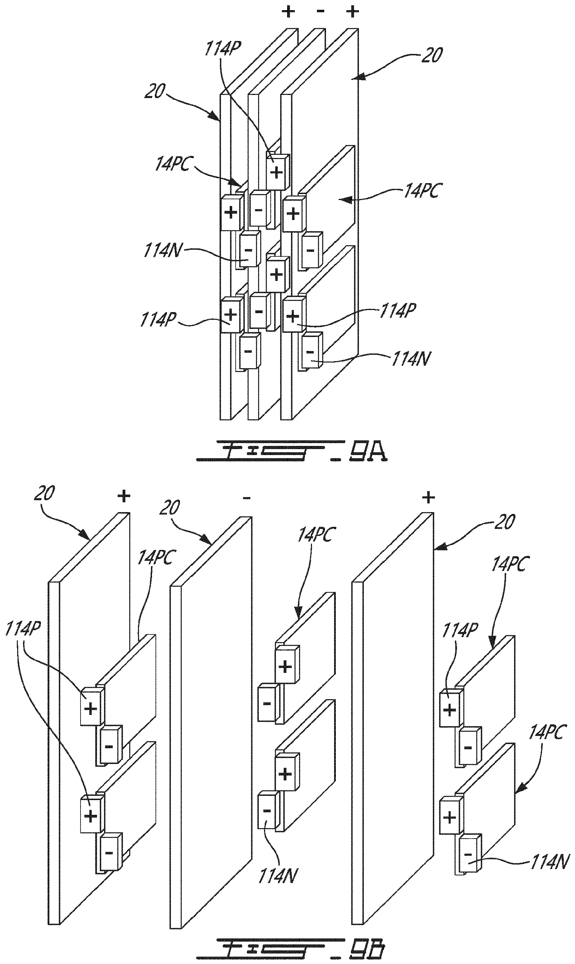

Referring to Figs. 9A and 9B, there is shown a configuration of the battery module 10 in which the cells 14 are pouch cells 14PC. The description above regarding the battery module 10 and its components applies *mutatis mutandis* to the configuration of the battery module 10 shown in Figs. 9A and 9B with the pouch cells 14PC. The pouch cells 14PC are substantially planar bodies. Each pouch cell 14PC may include an electrically-insulating skin, which allows the pouch cell 14PC to be applied or mounted directly against the heat pipes 20 without conducting electricity to the heat pipes 20 via the skin of the pouch cells 14PC. Each pouch cell 14PC has a positive terminal tab 114P and a negative terminal tab 114N. The positive terminal tabs 114P are welded or otherwise attached to the heat pipes 20 (shown in this configuration as heat pipe plates) making these heat pipes 20 the "positive heat pipes" 20 or electrodes, and the negative terminal tabs 114N are welded or otherwise attached to the heat pipes 20 making these heat pipes 20 the "negative heat pipes" 20 or electrodes. The positive and negative terminal tabs 114P,114N are thermally and electrically conductive, such that both heat and electricity can be conducted through the positive and negative terminal tabs 114P,114N and through the heat pipes 20. The pouch cells 14PC are therefore electrically and thermally directly connected to the heat pipes 20, via their positive and negative terminal tabs 114P,114N. During operation of the battery module 10 of Figs. 9A and 9B, some heat from the pouch cells 14PC may pass to the heat pipes 20 through the skin of the pouch cells 14PC via conduction, and substantially more heat from the pouch cells 14PC may pass to the heat pipes 20 through the positive and negative terminal tabs 114P,114N via conduction.

The heat pipe plates 20 may allow for cooling both the positive terminal(s) 14P (where heat is conveyed to the positive terminal 14P by being extracted from the central core of the cell(s) 14 via conduction) and the negative terminal(s) 14N (where heat is conveyed to the negative terminal 14N by being extracted from the walls and bottom of the cell(s) 14). Thus, the heat pipe plates 20 may operate so that the cell(s) 14 transfer heat from the core of the cell(s) 14 to one of the heat pipe plates 20 via the positive terminal 14P, and transfer heat from a wall or bottom of the cell(s) 14 to the other of the heat pipe plates 20 via the negative terminal 14N.

In an embodiment, the volume of the interior 121 of the case 12, where the volume is defined outside of the cell(s) 14, outside of the heat pipe plates 20 and outside of the heat source 31 / heat sink 30, is filled only with air or another gas. In an embodiment, the volume of the interior 121 of the case 12, where the volume is defined outside of the cell(s) 14, outside of the heat pipe plates 20 and outside of the heat source 31 / heat sink 30, is free of liquid.

Figs. 5 and 6 show different arrangements of multiple battery modules 10, such as the one disclosed herein and in the enclosed figures. Referring to Fig. 5, each battery module 10 of the plurality of battery modules 10 is connected in series to another one of the battery modules 10. The series connection of battery modules 10 in Fig. 5 may allow for increasing the collective voltage applied to a load by all the battery modules 10. Referring to Fig. 6, each battery module 10 of the plurality of battery modules 10 is connected in parallel with another one of the battery modules 10. In an embodiment, the cell(s) 14 are arranged in parallel connection within each of the battery modules 10 in the parallel or series arrangement of battery modules 10. The number of battery modules 10 in series or parallel arrangement may vary. The multiple battery modules 10 connected together may be referred to collectively as a "battery pack", in that a battery pack is made up of multiple battery modules 10, where each battery module 10 includes the cell(s) 14 and the heat pipes 20.

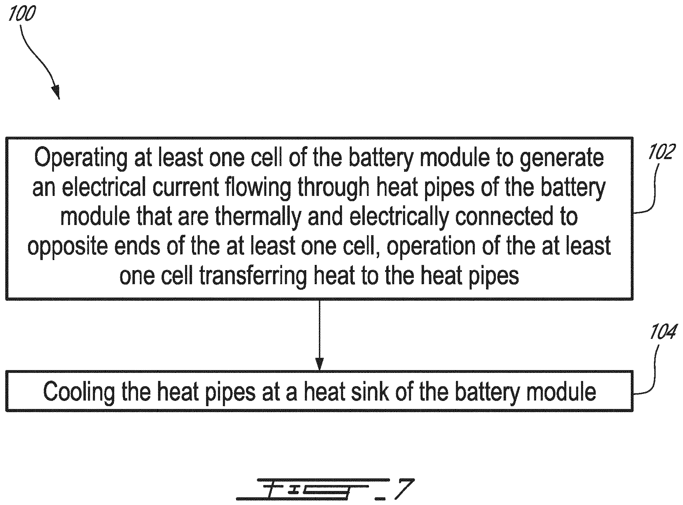

Referring to Fig. 7, there is disclosed a method 100 of cooling the battery module 10. At 102, the method 100 includes operating the cell(s) 14,14PC to generate an electrical current flowing through the heat pipes 20. Operation of the cell(s) 14,14PC transfers heat to the heat pipes 20. The transfer of heat may vaporize the heat pipe thermal transfer fluid 20F within the heat pipes 20. At 104, the method 100 includes cooling the heat pipes 20 at the heat sink 30. Cooling the heat pipes 20 may include cooling the vaporized, vapour-fluid, or heated plate thermal transfer 20F fluid at the heat sink 30 of the battery module 10 to condense or cool the heat pipe thermal transfer fluid 20F. The condensed heat pipe thermal transfer fluid 20F may then flow downward via gravity through the internal passage 26 toward the lowed end 20L of the heat pipes 20. At 104, cooling the heat pipes 20 may include cooling the vaporized heat pipe thermal transfer fluid 20F at an upper extremity of the heat pipes 20, such as at their upper plate portions 24U. At 104, cooling the heat pipes 20 may include cooling the vaporized heat pipe thermal transfer fluid 20F with the second thermal-transfer liquid 32 flowing between the spaced-apart heat pipes 20 and through the battery module 10.

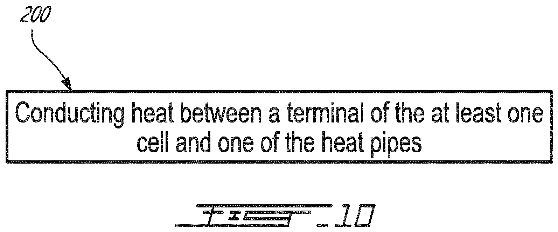

Referring to Fig. 10, there is disclosed a method 200 of transferring heat within the battery module 10. The method includes conducting heat between a terminal 14P,14N,114P,114N of the cell(s) 14,14PC and one of the heat pipes 20. The heat may be transferred when the cell(s) 14,14PC are operating to generate electricity. The heat may be transferred when the cell(s) 14,14PC have ceased to generate electricity, for example in order to cool down the cell(s) 14,14PC after they have ceased to operate. The heat may be transferred to warm the cell(s) 14,14PC before they being to operate to generate electricity.

There is disclosed a method of heating the battery module 10. The method 100 includes heating the heat pipes 20 with the heat source 31, such as with the second thermal transfer liquid 32. This will also heat the cell(s) 14. The method includes operating the cell(s) 14 to generate an electrical current flowing through the heat pipes 20.

In an embodiment, the rate of cooling/heating of the second thermal transfer fluid 32 that is in contact with the heat pipes 20 may be varied by a control system that measures the temperature of the cell(s) 14 and the temperature of the second thermal transfer fluid 32, and modifies the flow rate (e.g. by increasing or decreasing power to an electric pump or by using a variable displacement pump, or by using a thermostat or other actuator that responds to temperature) to increase the rate of cooling or heating when needed. For example, if a cell(s) 14 or string of battery modules 10 is suspected to be at risk of thermal runaway, the cooling rate of the second thermal transfer fluid 32 can be increased aggressively to reduce the probability of thermal runaway or the probability of cell-to-cell propagation in the event that a cell(s) 14 enters thermal runaway. The rate of circulation can also be increased when the heat pipe 20 is being used to warm up the battery module 10, for example at the beginning of a mission when there is a need to warm-up the battery module 10 quickly. Reference is made to US patent application 63/084,330 and to any patent application claiming priority to US patent application 63/084,330.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A battery module (10), comprising:
at least one cell (14; 14PC) having a positive terminal (14P; 114P), a negative terminal (14N; 114N), and a voltage and a current rating;
a first electrically conductive heat pipe (20; 20A) thermally and electrically connected to the positive terminal (14P; 114P); and
a second electrically conductive heat pipe (20; 20B) thermally and electrically connected to the negative terminal (14N; 114N),
wherein the first and second heat pipes (20; 20A, 20B) have the voltage and the current rating.

2. The battery module (10) of claim 1, wherein:
the at least one cell (14; 14PC) is a plurality of cells (14; 14PC); and
the plurality of cells (14; 14PC) are electrically interconnected by the first and second heat pipes (20; 20A, 20B) via respective ones of the positive and negative terminals (14P, 14N; 114P, 114N) of the plurality of cells (14; 14PC) in one of an electrical series arrangement and an electrical parallel arrangement to provide the voltage and the current rating.

3. The battery module (10) of claim 2, wherein:
the plurality of cells (14; 14PC) are electrically interconnected by the first and second heat pipes (20; 20A, 20B) via the respective ones of the positive and negative terminals (14P, 14N; 114P, 114N) of the plurality of cells (14; 14PC) in the electrical parallel arrangement; and
each of the first and second heat pipes (20; 20A, 20B) is shaped as a plate, and optionally wherein the first and second heat pipes (20; 20A, 20B) structurally support a weight of the plurality of cells (14; 14PC).

4. The battery module (10) of any one of the preceding claims, comprising a heat sink (30) thermally connected to the first and second heat pipes (20; 20A; 20B).

5. The battery module (10) of any one of the preceding claims, comprising a heat source (31) thermally connected to the first and second heat pipes (20; 20A, 20B).

6. The battery module (10) of claim 5 as dependent on claim 4, wherein:
the battery module (10) has a mounted orientation when in use in an aircraft;
each of the first and second heat pipes (20; 20A, 20B) has a top half and a bottom half, the bottom half being below the top half relative to a direction of gravity when the battery module (10) is in the mounted orientation;
the heat sink (30) is thermally connected to the top half of the first and second heat pipes (20; 20A, 20B); and
the heat source (31) is thermally connected to the bottom half of the first and second heat pipes (20; 20A, 20B).

7. The battery module (10) of claim 4 or of claims 5 or 6 when dependent on claim 4, wherein the heat sink (30) has a second thermal transfer fluid (32) being a liquid.

8. The battery module (10) of claim 4 or of claims 5 or 6 when dependent on claim 4, wherein:
each of the first and second heat pipes (20; 20A, 20B) is shaped as a plate:
the first heat pipe (20; 20A) has a first upper plate portion (24U) and the second heat pipe (20; 20B) has a second upper plate portion (24U??); and
the heat sink (30) includes a heat-exchange passage (34) delimited by the first upper plate portion (24U), the second upper plate portion (24U), and a flow guide (36) forming a seal between the heat-exchange passage (34) and the at least one cell (14; 14PC), the heat sink (30) including a second thermal transfer fluid (32) configured to flow along the flow guide (36) and through the heat-exchange passage (34).

9. The battery module (10) of any one of the preceding claims, wherein at least one of the first heat pipe (20; 20A) and the second heat pipe (20; 20B) has at least one circulation hole (22PH) extending through the at least one of the first heat pipe (20; 20A) and the second heat pipe (20; 20B).

10. The battery module (10) of any one of the preceding claims, wherein the at least one cell (14; 14PC) is at least one pouch cell (14PC).

11. The battery module (10) of any one of the preceding claims, wherein one or both of the positive and negative terminals (14P, 14N; 114P, 114N) defines a terminal surface (14S) facing a corresponding one of the first and second heat pipes (20; 20A, 20B), at least part (14SA) of the terminal surface (14S) being free of overlap by the corresponding one of the first and second heat pipes (20; 20A, 20B).

12. The battery module (10) of claim 11, wherein at least part (14SA) of the terminal surface (14") is free of overlap by the first heat pipe (20; 20A).

13. The battery module (10) of claim 11, wherein the corresponding one of the first and second heat pipes (20; 20A, 20B) defines a plate surface (22O; 22I) terminating at an edge (22E), and wherein:
some of the terminal surface (14S) overlaps the plate surface (22O; 22I) and a remainder of the terminal surface (14S) extends past the edge (22E); and/or
the edge (22E) has edge cut-outs (22EC), and some of the terminal surface (14S) overlaps the plate surface (22O; 22I) and a remainder of the terminal surface (14S) is aligned with one of the edge cut-outs (22EC); and/or
the corresponding one of the first and second heat pipes (20; 20A, 20B) defines plate holes (22PC), and the terminal surface (14S) is aligned with one of the plate holes (22PC).

14. The battery module (10) of any one of the preceding claims, wherein one or both of the positive and negative terminals (14P, 14N; 114P, 114N) has wiring (14WS) extending between the one or both of the positive and negative terminals (14P, 14N; 114P, 114N) and a corresponding one of the first and second heat pipes (20; 20A, 20B).

15. A method of transferring heat within a battery module (10) having at least one cell (14; 14PC) and heat pipes (20; 20A; 20B) connected to the at least one cell (14; 14PC), the method comprising conducting heat between a terminal (14P; 14N; 114P; 114N) of the at least one cell (14; 14PC) and one of the heat pipes (20; 20A; 20B).
